# EUROPÄISCHE PATENTSCHRIFT

(11) **EP 0 932 846 B1**
(45) Veröffentlichungstag und Bekanntmachung des Hinweises auf die Patenterteilung: **22.09.2004**
(21) Anmeldenummer: 97943660.7
(22) Anmeldetag: 21.10.1997
(51) Int. Cl.: G02B 26/10, G09B 9/32

(54) **VERFAHREN ZUR RÄUMLICHEN BEWEGUNG DES PROJEKTIONSSTRAHLES EINES VIDEO- ODER GRAPHIKPROJEKTORS**
METHOD OF SPATIALLY MOVING A PROJECTION BEAM FROM A VIDEO OR GRAPHICS PROJECTOR
PROCEDE DE DEPLACEMENT SPATIAL DU FAISCEAU DE PROJECTION D'UN PROJECTEUR VIDEO OU GRAPHIQUE

(30) Priorität: 21.10.1996 AT 184096
(43) Veröffentlichungstag der Anmeldung: 04.08.1999
(73) Patentinhaber: Jessl, Rainer, 4020 Linz (AT)
(72) Erfinder: Jessl, Rainer, 4020 Linz (AT)
(74) Vertreter: Schlich, George William
(86) Internationale Anmeldenummer: PCT/AT1997/000226
(87) Internationale Veröffentlichungsnummer: WO 1998/018037

(56) Entgegenhaltungen:
- WO-A-94/08425
- GB-A- 2 265 064
- US-A- 3 170 978
- US-A- 3 976 837
- US-A- 4 235 535
- US-A- 4 645 318
- US-A- 4 702 699
- US-A- 5 537 251

## Beschreibung

Die Erfindung bezieht sich auf ein Verfahren zur räumlichen Bewegung des Projektionsstrahles eines Video- oder Graphikprojektors, wobei der von einer Lichtquelle ausgehende und über und/oder durch einen opto-elektronischen Bilderzeuger und durch ein Projektionsobjektiv geleitete Projektionsstrahl mittels wenigstens eines um zwei Achsen, einer in Einfallsrichtung des Projektionsstrahles verlaufenden X-Achse und einer querverlaufenden Y-Achse, schwenkverstellbaren Spiegels abgelenkt wird.

Video- und Graphikprojektoren, die Videobilder oder Computergraphiken zu projizieren erlauben, werden bisher meist zu einer stehenden Projektion auf eine vorgegebene Projektionsfläche mit unbewegt auf diese Projektionsfläche ausgerichtetem Projektionsstrahl verwendet, so daß diese Projektionen an fest vorjustierte Bildpositionen gebunden sind. Für die Anwendung von Video- oder Graphikprojektionen im Schau-, Werbeund Simulationsbereich wird jedoch eine räumliche Bewegung des Projektionsstrahles und damit eine schnelle Bewegbarkeit bei genauer Positionierbarkeit des Projektionsbildes gefordert, wozu es grundsätzlich möglich wäre, den Projektor in einem schwenkbaren Drehbügel zu lagern, was jedoch nur zu einem trägen, lichtschwachen und vibrationsgestörten Bewegungsprojizieren führt.

Um schnelle Lichteffekte und gute räumlich bewegte Projektionen zu erreichen, wurde auch schon vorgeschlagen, den Projektionsstrahl nach dem Projektionsobjektiv durch einen schwenkverstellbaren Spiegel abzulenken, wobei allerdings bei einer Spiegelverschwenkung um eine in Einfallsrichtung des Projektionsstrahies verlaufende Drehachse ein grundlegendes Abbildungsproblem auftritt, da sich das Projektionsbild in Abhängigkeit von der Spiegelstellung mitverdreht, bis es nach einer 180°igen Spiegeldrehung auf dem Kopf steht. Um diesen Abbildungsfehler zu korrigieren, wird gemäß der WO 94/08425 bzw. der US 4 235 535 der Projektionsstrahl nach dem Bilderzeuger durch den Einsatz von Spiegeln bzw. optischen Prismen um die Strahlachse verdreht, um das projizierte Bild ohne Abbildungsfehler projizieren zu können. Diese optische Beeinflussung des Projektionsstrahles erfordert allerdings einen beträchtlichen Bauaufwand, nimmt einen entsprechenden Bauraum in Anspruch, erhöht die Lichtverluste beim Projizieren und birgt in sich zusätzliche optische Fehlerquellen, die zu einer Beeinträchtigung der Projektionsqualität führen.

US 3 976 837 und US 5 537 251 zeigen Anordnungen von einem oder mehreren CRTS mit einem rotierenden Raster um einen Stereoskopischen oder Panoramischen Effekt oder ein Bild das aus 360° sichtbar ist, zu erzeugen.

Der Erfindung liegt daher die Aufgabe zugrunde, ein Verfahren der eingangs geschilderten Art anzugeben, das auf rationelle und aufwandsarme Weise schnellste Bewegungsprojektionen bei einwandfreiem Ausgleich der spiegeldrehungsbedingten Abbildungsfehler erlaubt und zudem die Möglichkeit einer weiteren Beeinflussung der zu projizierenden Bilder bietet.

Die Erfindung löst diese Aufgabe, wie in den Patentansprüchen beschrieben. Durch diese so einfache wie elegante Maßnahme wird das zu projizierende Bild selbst im Sinne eines Fehlerausgleiches beeinflußt und zum Ausgleich eines durch die Spiegelschwenkverstellung bedingten Abbildungsfehlers dieser Schwenkverstellung winkelstarr nachgeführt. Dadurch werden eigene optische Einrichtungen zur Beeinflussung des bereits bildbeaufschlagten Projektionsstrahles vermieden und mit verhältnismäßig geringem Bauaufwand und Platzbedarf beste Projektionsqualitäten gewährleistet.

Eine besonders vorteilhafte Möglichkeit der Bildnachdrehung ergibt sich, wenn die Bilder des Bilderzeugers über einen den Bilderzeuger ansteuernden digitalen Spezialeffekt-Prozessor mit einer Funktion "Rotation normal zur Bildebene" gedreht werden. Dieser an sich in der Videotechnik oder aus der GB 22 65 064 A bekannte Prozessor bietet eine einfache Voraussetzung, den opto-elektronischen Bilderzeuger entsprechend den prozessoreigenen Funktionen anzusteuern und durch die Funktion "Rotation normal zur Bildebene" das Bild des Bilderzeugers bereits in der zur Abbildungskorrektur erforderlichen Drehstellung entstehen zu lassen. Dabei kann für den Bilderzeuger jede für ein \/ideo- oder Graphikprojizieren geeignete Technik, in welcher ein von einer Lichtquelle ausgehender Projektionsstrahl über und/oder durch einen opto-elektronischen Bilderzeuger geleitet wird, angewandt werden, beispielsweise LCD (Liquid Cristal Display), DMD (Digital Micromirror Device), ILA (Image Light Amplifier), Light Valve-Technik u. dgl., da der Prozessor die den Bilderzeuger ansteuernden Bildsignale beeinflußt und damit nicht in die eigentliche Funktion des Bilderzeugers einzugreifen braucht.

Ist dem Bilderzeuger ein Spezialeffekt-Prozessor zugeordnet, können die Bilder des Bilderzeugers über diesen Prozessor zusätzlich hinsichtlich Helligkeit, Dimensionierung, Vergrößerung, Maskierung, Farbeinstellung, Entzerrungen u. dgl. beeinflußt bzw. geändert werden, was die Anwendungsbereiche und Möglichkeiten des Bewegungsprojizierens entsprechend erweitert und neben der Abbildungsfehlerkorrektur auch den Bildeindruck, die Bildgröße, das Bildformat u. dgl. einzustellen erlaubt. Damit läßt sich beispielsweise auch das Bild so abdecken (maskieren) bzw. verkleinern, daß durch eine Verdrehung des Bildes der Rahmen des Bilderzeugers nicht überschritten wird und das gesamte Bild auch in gedrehter Stellung projiziert werden kann. Ohne Mehraufwand lassen sich so alle Funktionen des Prozessors auch für die Bewegungsprojektionen nutzen.

Eine weitere Möglichkeit der Bildnachdrehung ergibt sich dadurch, daß ein Bildtrãger für die zu projizierenden Bilder des Bilderzeugers zum Nachdrehen der Bilder selbst gedreht wird. Ein solcher Bildträger, auf dem das zu projizierende Bild entsteht, braucht dazu lediglich über ein elektromechanisches Drehwerk in Zwangskopplung mit der Spiegeldrehung urn die X-Achse verdreht zu werden, was wiederum zu einem einwandfreien Ausgleich des drehbedingten Abbildungsfehlers führt.

Ist ein Bilderzeuger gemäß DMD-Technik von Texas Instruments vorhanden, dessen Bildträger eine Vielzahl kippverstellbarer Spiegelelemente aufnimmt, wird der Bildträger um eine zu den jeweils bildwirksamen Spiegetelernenten normale Drehachse gedreht, so daß trotz der Kippstellung der aktivierten Spiegelelemente das zu projizierende Bild auch in gedrehter Stellung entsteht. Gemäß der DMD-Technik werden die jedem Bildpunkt zugeordneten Spiegelelemente durch ihr Aktivieren so gekippt, daß der Projektionsstrahl durch diese Spiegelelemente zum Projektionsobjektiv gelenkt werden. Die nicht aktivierten, bildunwirksamen Spiegelelemente bleiben gegensinnig gekippt, wodurch die auftreffenden Lichtstrahlen zu einem Lichtabsorber neben dem Projektionsobjektiv abgeleitet werden und keine Bildpunkte ergeben. Um dieses bilderzeugende Spiegelungsprinzip durch ein Drehverstellen nicht zu gefährden, muß die Drehachse des die Spiegelelemente aufnehmenden Bildträgers um eine zu den bildwirksamen Spiegelelementen normale Drehachse bewegt werden. Außerdem muß der Absorber für die abgeleiteten bildunwirksamen Lichtstrahlen ebenfalls mitgedreht werden oder eine entsprechend ringförmige Gestalt aufweisen.

Nach einer besonders vorteilhaften Ausgestaltung der Erfindung wird der dem Bilderzeuger zugeordnete Spezialeffekt-Prozessor über eine Steuerbaugruppe angesteuert, die gleichzeitig auch die Schwenkverstellantriebe des Spiegels, Versteileinrichtungen des Projektionsobjektivs, Regeleinrichtungen der Lichtquelle und gegebenenfalls den Drehantrieb für den Bildträger ansteuert. Damit kann der Projektor mittels der Steuerbaugruppe nicht nur hinsichtlich der Korrektur von Abbildungsfehlem angesteuert werden, sondern auch hinsichtlich eigentlicher Projektorfunktionen, so daß von dieser Steuerbaugruppe aus die Spiegeldrehungen, die Fokusierung des Projektionsobjektivs, die Zoomfunktion dieses Objektivs, die Helligkeit der Lichtquelle bzw. des Projektionsstrahles, die verschiedenen Funktionen des Prozessors selbst u. dgl. geregelt bzw. eingestellt werden können.

Auf Grund einer solchen Steuerbaugruppe ergibt sich dann die Möglichkeit, die Steuerbaugruppe ihrerseits über ein externes Steuergerät, vorzugsweise nach einem vorbestimmbaren Programm ansteuern zu lassen, was beispielsweise ein Ansteuern dieses Steuergerätes über ein Lichtstellpult einer Bühne erlaubt. so daß der Video- oder Graphikprojektor ähnlich wie einen Scheinwerfer innerhalb eines komplexen Lichtablaufprogrammes eingesetzt und bedient werden kann.

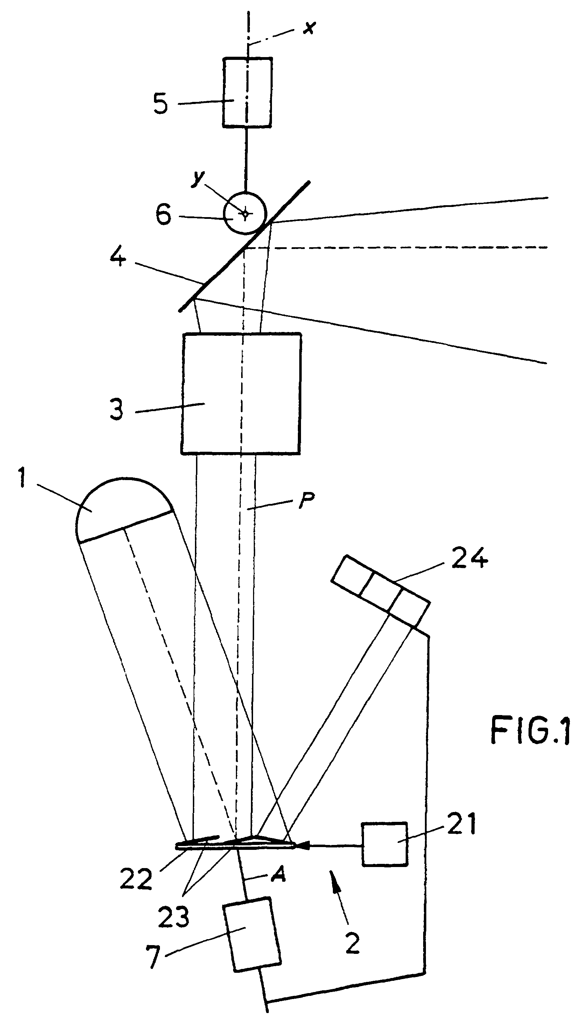

In der Zeichnung ist der Erfindungsgegenstand beispielsweise veranschaulicht, und zwar zeigen
- Fig. 1: einen Videoprojektor zur Durchführung des erfindungsgemäßen Verfahrens im Schema und
- Fig. 2: die Steuerstruktur dieses Projektors in einem Blockschaltbild.

Beim Bewegungsprojizieren von Videobildem oder Computergraphiken wird von einer Lichtquelle 1 ein durch nicht weiter dargestellte Reflektoren und Linsen aufbereiteter Projektionsstrahl P über einen opto-elektronischen Bilderzeuger 2 und durch ein Projektionsobjektiv 3 geleitet, hinter dem zur räumlichen Bewegung des Projektionsstrahles ein Spiegel 4 mit zwei elektromechanischen Drehwerken 5, 6 zur Drehung des Spiegels um eine in Einfallsrichtung des Projektionsstrahles verlaufende X-Achse und um eine dazu querverlaufende Y-Achse angeordnet ist, von welchem Spiegel 4 dann der bildbeaufschlagte Projektionsstrahl entsprechend der Ablenkung auf nicht dargestellte Leinwände, Objekte, Personen oder andere beliebige Medien fällt. Der Bilderzeuger 2 arbeitet zur Bilderzeugung hier nach der DMD-Technik von Texas Instruments und umfaßt einerseits einen Bildsignalgeber 21 und einen Bildträger 22, welcher Bildträger 22 eine Vielzahl kippverstellbarer Spiegelelemente 23 aufweist, die über den Bildsignalgeber 21 in Abhängigkeit von den zu projizierenden Bildern so aktiviert werden, daß die bildwirksamen Spiegelelemente 23 die einfallenden Lichtstrahlen des Projektionsstrahles zum Projektionsobjektiv 3 reflektieren, die unwirksamen Spiegelelemente hingegen die Lichtstrahlen einem Lichtabsorber 24 zuleiten.

Um die durch eine Schwenkverstellung des Spiegels 4 um die X-Achse bedingten Abbildungsfehler zu korrigieren, wird winkelstarr mit der Schwenkverstellung des Spiegels 4 der Bildträger 22 des Bilderzeugers 2 nachgedreht, wobei der Bildträger 22 mittels eines Drehwerks 7 um eine zu den wirksamen Spiegelelementen 23 normale Drehachse A gedreht wird, um den Bilderzeugungseffekt der Spiegelelemente nicht zu beeinträchtigen. Auch der Lichtabsorber 24 wird mitgedreht, damit die bildunwirksamen Lichtstrahlen unabhängig von der Drehstellung des Bildträgers 22 abgefangen werden.

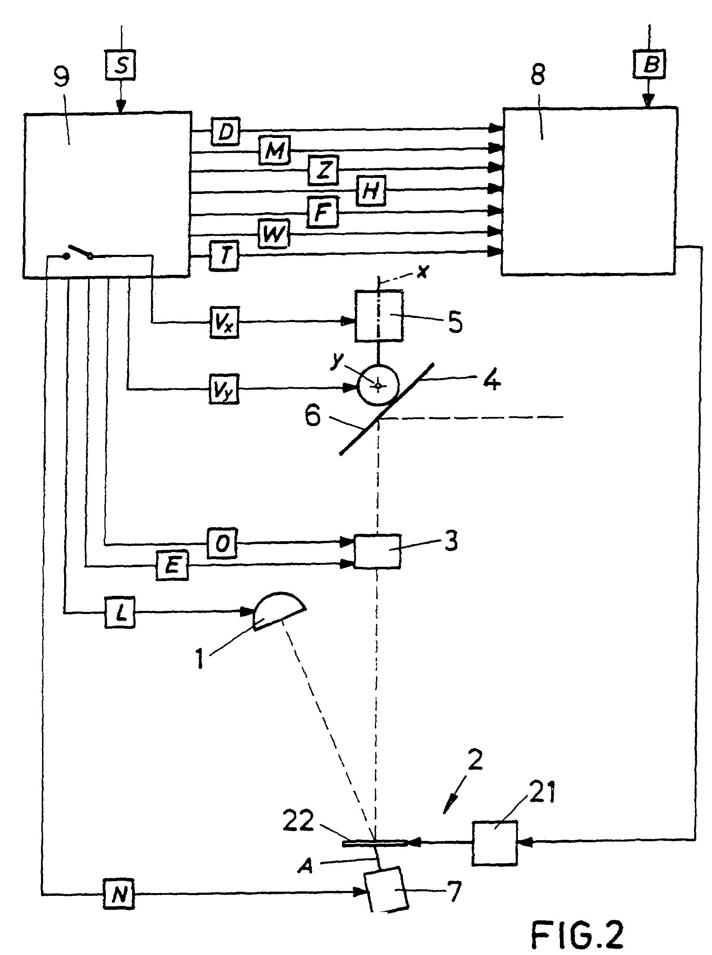

Wie in Fig. 2 veranschaulicht, umfaßt die Steuerstruktur für die Bewegungsprojektion einen dem Bilderzeuger 2 zugeordneten Spezialeffekt-Prozessor 8 und eine Steuerungsbaugruppe 9, wobei der Prozessor 8 einerseits von Bildsignalen B eines Videogerätes oder eines Computers zur Erzeugung der zu projizierenden Bilder und anderseits über die Steuerungsbaugruppe 9 hinsichtlich der Funktionen des Prozessors 8, wie Drehung des Bildsignals D, Maskierung des Bildsignals M, Zoomen des Bildsignals Z, Helligkeit des Bildsignals H, Farbflächensignale F, Wnkelsignal in Abhängigkeit von der Spiegeldrehstellung W und Trapezentzerrung des Bildsignales T, angesteuert wird. Der Prozessor 8 selbst beeinflußt seinerseits entsprechend diesen Vorgaben den Bilderzeuger 2, der ein entsprechendes Bild auf dem Bildträger 22 entstehen läßt. Gleichzeitig mit der Ansteuerung des Prozessors 8 steuert die Steuerungsbaugruppe 9 in Abhängigkeit von aus einem nicht weiter dargestellten externen Steuergerät eingehenden Steuersignalen S zusätzlich über die Steuerleitungen V, O, E, L, N die Drehwerke 5, 6 des Spiegels 4 zur Drehverstellung um die X- bzw. Y-Achse, die Einstelleinrichtung des Projektionsobjektivs 3 zur Fokosierung bzw. zum optischen Zoomen des Projektionsbildes, die Lichtquelle 1 zur Helligkeitsbeeinflussung und gegebenenfalls das Drehwerk 7 zur Nachdrehung des Bildträgers 22 entsprechend der X-Verstellung des Spiegels 4 an.

## Patentansprüche

1. Verfahren zur kontrollierten räumlichen Bewegung eines projizierten Bildes, ähnlich einem beweglichen Scheinwerfer, mit den folgenden Schritten:
Erhalten eines digitalen Bildsignals (B)
Erhalten eines auf die gewünschte Bewegung in zwei orthogonalen Achsen des Projizierten Bildes hinweisenden Steuersignals (S)
Weiterleiten des digitalen Bilsignals zu einem Bilderzeuger (22, 23)
Führen eines Projektionsstrahles von einer Lichtquelle (1) über oder durch den Bilderzeuger (22, 23) und zu mindestens einem Spiegel (4) um das Projizierte Bild in Reaktion auf das Steuersignal (S) zu bewegen, wobei das durch den Bilderzeuger erzeugte Bild in Kopplung mit der Schwenkbewegung des Spiegels um eine sich in Einfallsrichtung des sich auf dem Spiegel Befindlichen Projektionsstrahles erstreckende X-Achse durch drehen des Bilderzeugers oder durch Verarbeiten des Digitalen Bildsignals gedreht wird, um durch die Schwenkbewegung des Spiegels entstehende Abbildungsfehler auszugleichen.

2. Verfahren nach Anspruch 1, wobei das digitale Bildsignal in einem digitalen Spezialeffekt-Prozessor verarbeitet wird, der in Antwort auf das Steuersignal kontrolliert wird.

3. Verfahren nach Anspruch 2, wobei der digitale Spezialeffekt-Prozessor auch dazu ausgestaltet ist, um das digitale Bildsignal mindestens hinsichtlich eines der folgenden Merkmale zu verarbeiten: Helligkeit, Dimensionierung, Vergrösserung, Maskierung, Farbeinstellung und Entzerrungen.

4. Verfahren nach einem der Ansprüche 1 bis 3, wobei ein externes Steuersignal von einer Steuerbaugruppe empfangen wird.

5. Verfahren nach Anspruch 4, wobei die Steuerbaugruppe gleichzeitig das Schwenken des Spiegels und die anpassende Drehung des Bildes in Antwort auf das externe Steuersignal kontrolliert.

6. Verfahren nach Anspruch 1, wobei der Bildträger eine Vielzahl von Spiegelelementen aufweist, die jeweils von einer bildwirksamen zu einer bildunwirksamen Konfiguration kippverstellbar sind, und wobei der Bildträger um eine Achse normal zu den Spiegelelementen in ihrer bildwirksamen Konfiguration gedreht wird

7. Verfahren nach Anspruch 6, wobei ein Lichtabsorber bereitgestellt wird, um von den Spiegelelementen in ihrer bildunwirksamen Konfiguration reflektiertes Licht zu sammeln, wobei der Lichtabsorber zur Drehung mit dem Bilderzeuger eingestellt wird.

8. Verfahren nach Anspruch 6, wobei ein Lichtabsorber bereitgestellt wird, um von den Spiegelelementen in ihrer unwirksamen Konfiguration reflektiertes Licht zu sammeln, wobei der Lichtabsorber ringförmig mittig auf der Drehachse des Bildträgers ausgebildet ist.

## Claims

1. A method for the controlled 3D movement of a projected image in the manner of a moveable spotlight, comprising the following steps:
receiving a digital image signal;
maintaining a control signal indicating the desired movement, in two orthogonal axes, of the projected image;
transmitting the digital image signal to an image generator;
leading a projection beam from a light source over or through the image generator and to at least one mirror in order to move the projected image in reaction to the control signal;
wherein the image generated by the image generator is rotated, by rotating the image carrier or by processing the digital image signal in a coupling with the swivelling motion of the mirror, around an X axis extending in the direction of incidence of the projection beam located on said mirror to compensate distortions arising from the swivelling motion of the mirror.

2. A method according to Claim 1, wherein the digital image signal is processed in a digital special effects processor which is controlled in response to the control signal.

3. A method according to Claim 2, wherein the processor influences or changes the image with respect to brightness, dimensioning, magnification, masking, colour and rectification.

4. A method according to any one of Claims 1 to 3, wherein an external control signal is received by a control assembly.

5. A method according to Claim 4, wherein the control assembly simultaneously controls the swivelling of the mirror and the compensating rotation of the image in response to the external control signal.

6. A method according to Claim 1, wherein the image carrier comprises a plurality of mirror elements with the elements being tiltable from an image effective to an image ineffective configuration, and whereby the image carrier is rotated about an axis normal to mirror elements in the image effective configuration.

7. A method according to Claim 6, wherein a light absorber is provided in order to collect light reflected from elements in the image ineffective configuration, whereby the light absorber is adapted for rotation of the image generator.

8. A method according to Claim 6, wherein a light absorber is provided in order to collect light reflected from elements in the image ineffective configuration, whereby the light absorber is ring-shaped centred about the axis of rotation of the image carrier.

## Revendications

1. Procédé pour le déplacement contrôlé dans l'espace d'une image projetée, à la manière d'un projecteur mobile, avec les étapes consistant à :
obtenir un signal d'image (B) ;
obtenir un signal de commande (S) indiquant le déplacement souhaité de l'image projetée selon deux axes orthogonaux ;
retransmettre le signal d'image numérique à un générateur d'images (22, 23) ;
guider un faisceau de projection d'une source lumineuse (1) via ou à travers le générateur d'images (22, 23) et au moins un miroir (4), afin de déplacer l'image projetée en réaction au signal de commande (S), l'image générée par le générateur d'images étant tournée en couplage avec le mouvement de pivotement du miroir autour d'un axe X s'étendant en la direction d'incidence du faisceau de projection se trouvant sur le miroir grâce à la rotation du générateur d'images ou grâce au traitement du signal d'image numérique, afin de compenser des erreurs de reproduction dues au mouvement de pivotement du miroir.

2. Procédé selon la revendication 1, dans lequel le signal d'image numérique est traité dans un processeur numérique à effets spéciaux, lequel est contrôlé en réponse au signal de commande.

3. Procédé selon la revendication 2, dans lequel le processeur numérique à effets spéciaux est également conçu afin de pouvoir traiter le signal d'image numérique au moins en ce qui concerne l'une des caractéristiques suivantes : luminosité, dimensionnement, agrandissement, masquage, réglage de la couleur et alignement de crête.

4. Procédé selon l'une quelconque des revendications 1 à 3, dans lequel un signal de commande externe est réceptionné par un bloc de commande.

5. Procédé selon la revendication 4, dans lequel le bloc de commande contrôle en même temps le pivotement du miroir et la rotation d'adaptation de l'image en réponse au signal de commande externe.

6. Procédé selon la revendication 1, dans lequel le support d'image présente une multitude d'éléments de miroir pouvant respectivement être réglés par basculement pour passer d'une configuration active pour former une image à une configuration inactive, et sachant que le support d'image est tourné autour d'un axe normal par rapport aux éléments de miroir dans leur configuration active pour former une image.

7. Procédé selon la revendication 6, dans lequel un absorbeur de lumière est mis à disposition, afin de collecter de la lumière réfléchie provenant des éléments de miroirs dans leur configuration inactive, l'absorbeur de lumière étant réglé pour tourner avec le générateur d'images.

8. Procédé selon la revendication 6, dans lequel un absorbeur de lumière est mis à disposition, afin de collecter de la lumière réfléchie par les éléments de miroir dans leur configuration inactive, l'absorbeur de lumière étant réalisé en forme d'anneau centré sur l'axe de rotation de l'onde porteuse de l'image.
